(19) Europäisches Patentamt
European Patent Office
Office européen des brevets

(11) **EP 3 347 599 B1**

(12) **EUROPÄISCHE PATENTSCHRIFT**

(45) Veröffentlichungstag und Bekanntmachung des Hinweises auf die Patenterteilung:
**25.11.2020 Patentblatt 2020/48**

(21) Anmeldenummer: **16777538.6**

(22) Anmeldetag: **07.09.2016**

(51) Int Cl.:
**F04D 27/00** (2006.01)       **G01N 29/024** (2006.01)
**G01F 1/66** (2006.01)

(86) Internationale Anmeldenummer:
**PCT/EP2016/071121**

(87) Internationale Veröffentlichungsnummer:
**WO 2017/042237 (16.03.2017 Gazette 2017/11)**

(54) **VERFAHREN ZUR PROZESSÜBERWACHUNG EINER PROZESSANLAGE**

METHOD FOR MONITORING THE PROCESSING OF A PROCESSING SYSTEM

PROCÉDÉ DE SURVEILLANCE DU TRAITEMENT D'UNE INSTALLATION DE TRAITEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.09.2015 DE 102015115003**

(43) Veröffentlichungstag der Anmeldung:
**18.07.2018 Patentblatt 2018/29**

(73) Patentinhaber: **Industrial Science GmbH powered by IAV**
**64283 Darmstadt (DE)**

(72) Erfinder: **NAKHJIRI, Mehdi**
**60433 Frankfurt (DE)**

(74) Vertreter: **Habermann Intellectual Property Partnerschaft von Patentanwälten mbB Dolivostraße 15A 64293 Darmstadt (DE)**

(56) Entgegenhaltungen:
**DE-A1- 19 722 274       DE-A1-102008 021 102**
**DE-A1-102014 001 165    US-A1- 2006 123 892**
**US-A1- 2008 134 755     US-A1- 2015 086 888**

**Beschreibung**

Die Erfindung betrifft ein Verfahren zur Prozessüberwachung einer Prozessanlage mit einem von einem Prozessfluid durchströmten Fluidleitungsabschnitt mit einer Einströmöffnung und mit einer Ausströmöffnung, wobei zwischen der Einströmöffnung und der Ausströmöffnung mindestens eine die Prozessfluidströmung beeinflussende Anlagenkomponente angeordnet ist und wobei das durch die Einströmöffnung in den Fluidleitungsabschnitt einströmende Prozessfluid durch die Ausströmöffnung wieder ausströmt, wobei der durch die mindestens eine Anlagenkomponente hindurchströmende Massenstrom $\dot{m}$ und mindestens zwei Materialkonstanten als Ermittlungsgrößen des Prozessfluides ermittelt werden und in dem Ermittlungsschritt zwei thermodynamische Materialkonstanten des Prozessgases ermittelt werden.

Prozessanlagen mit einem Prozessfluid können beispielsweise für die Herstellung chemischer oder pharmazeutischer Erzeugnisse, aber auch für eine chemische Wandlung oder energetische Wandlung etwa in Wärmetauschern verwendet werden. Auch bei Verbrennungsprozessen, beispielsweise in einem Brennkraftmotor, werden Prozessfluide während der Prozessführung mit Anlagenkomponenten wie beispielsweise Verdichtern oder Turbinen beeinflusst.

Mit einer Prozessüberwachung soll erreicht werden, dass der mit der Prozessanlage durchgeführte Prozess in einer vorgegebenen Art und Weise abläuft, um das gewünschte Prozessergebnis zu erreichen. Dabei spielen üblicherweise sowohl eine oftmals angestrebte Qualitätskontrolle bei der Prozessführung und für das Prozessergebnis als auch Sicherheitsaspekte eine Rolle. Es wird deshalb in vielen Fällen eine möglichst aussagekräftige und zuverlässige Prozessüberwachung angestrebt, die kostengünstig und mit geringem konstruktivem Aufwand eingerichtet und betrieben werden kann.

Es ist aus der Praxis bekannt, eine Prozessführung in verschiedene Prozessteilschritte oder Prozessteilabschnitte zu unterteilen und für jeden Prozessteilabschnitt Teilkriterien vorzugeben, die eingehalten werden sollen und gegebenenfalls gesondert überprüft werden können, um das angestrebte Endergebnis des Prozesses zu erhalten. Sofern davon ausgegangen werden kann oder durch einzelne Messungen überprüft werden kann, dass die Teilkriterien für jeden Prozessteilabschnitt eingehalten werden, wird üblicherweise darauf geschlossen bzw. angenommen, dass auch die gesamte Prozessführung die für das Endergebnis vorgegebenen Prozesskriterien erfüllt. Eine aktive Beeinflussung oder Regelung der Prozessführung ist mit einer derartigen Kontrolle der Prozessführung nicht sinnvoll durchführbar, so dass beispielsweise in einem Prozessteilschritt erfolgte oder festgestellte Abweichungen oder Mängel in der Prozessführung in einem nachfolgenden Prozessteilabschnitt nicht mehr korrigiert werden können.

Für die Messung von Kenngrößen wie beispielsweise Druck oder Temperatur innerhalb eines Fluidleitungsabschnitts können handelsübliche und damit kostengünstige Druck- und Temperatursensoren verwendet werden. Auch die Betriebsparameter der Anlagenkomponente wie beispielsweise ein vorgegebener Stellweg sowie ein Einströmungsquerschnitt eines Ventils oder eine Drehzahl eines Verdichters bzw. einer Pumpe können oftmals ermittelt oder während der Prozessführung vorgegeben und berücksichtigt werden. Mit derartigen Informationen, die nachfolgend auch als übliche Kenngrößen bezeichnet werden, kann in einigen Fällen eine hinreichend aussagekräftige Prozessüberwachung durchgeführt werden, sofern das Prozessfluid und insbesondere dessen Zusammensetzung und dessen Eigenschaften bekannt sind.

Sind während der Durchführung eines Prozesses die Eigenschaften des Prozessfluids unbekannt, weil beispielsweise dessen Zusammensetzung sich während der Prozessführung verändern kann, ist eine aussagekräftige Prozessüberwachung oftmals nur eingeschränkt möglich und mit approximierenden Annahmen und Unsicherheiten verbunden. Dies kann dazu führen, dass die Prozessführung beispielsweise nicht in einem energetischen Optimum betrieben wird oder stoffumwandelnde Prozesse, aber auch Kühl- oder Heizprozesse nicht effizient durchgeführt werden. Unsicherheiten bei der Prozessüberwachung einer Prozessanlage können auch dazu führen, dass erhebliche Einschränkungen und gegebenenfalls zusätzliche kostenintensive Sicherungsmaßnahmen erforderlich sind, um eine sichere Prozessführung und damit einen sicheren Betrieb der Prozessanlage sicherstellen zu können. Beispielsweise aus US 2008/134755 A1 ist ein Verfahren zur Erfassung von Eigenschaften einer Gasmischung bekannt, wobei unter anderem eine Schallausbreitungsgeschwindigkeit in der Gasmischung gemessen wird. Ausgehend von der gemessenen Schallausbreitungsgeschwindigkeit können durch einen Vergleich mit Referenzwerten von Schallausbreitungsgeschwindigkeiten, die für verschiedene Referenzgasmischungen vorab ermittelt oder berechnet wurden, einige Eigenschaften der Gasmischung ermittelt werden. Die hierfür erforderlichen Messungen und Vorbereitungen sind aufwendig und für eine Prozessüberwachung eines Prozessgases mit unbekannten Eigenschaften nur bedingt geeignet.

Aus DE 10 2008 021102 A1 ist ein Verfahren zur Erfassung von Eigenschaften einer Gasmischung in einem Verdichter bekannt.

Es wird deshalb als eine Aufgabe der vorliegenden Erfindung angesehen, ein Verfahren zur Prozessüberwachung einer Prozessanlage so auszugestalten, dass mit möglichst einfachen und kostengünstigen Mitteln eine aussagekräftige und zuverlässige Prozessüberwachung auch bei zunächst unbekannten Eigenschaften des Prozessfluids durchgeführt werden kann.

Diese Aufgabe wird erfindungsgemäß durch ein Verfahren zur Prozessüberwachung der eingangs genannten Gattung gelöst, wobei Gemäß einer vorteilhaften Ausgestaltung des Erfindungsgedankens ist vorgesehen, dass das Prozessfluid gasförmig ist und in dem Ermittlungsschritt zwei thermodynamische Materialkonstanten des Prozessgases ermittelt werden. Erfindungsgemäß ist dabei vorgesehen, dass die zwei thermodynamischen Materialkonstanten ein Wertepaar aus der spezifischen Gaskonstante $R_s$, aus dem Isentropenexponent $\gamma$ und aus den spezifischen Wärmekapazitäten bei konstantem Druck $c_p$ oder bei konstantem Volumen $c_v$ bildet. Der Isentropenexponent $\gamma$ entspricht dem Verhältnis der Wärmekapazitäten bei konstantem Druck $c_p$ und bei konstantem Volumen $c_v$. Bei thermisch und kalorisch idealen Gasen entspricht die spezifische Gaskonstante $R_s$ der Differenz der Wärmekapazitäten bei konstantem Druck $c_p$ und bei konstantem Volumen $c_v$. Ein beliebiges Wertepaar aus den vorangehend genannten thermodynamischen Materialkonstanten $R_s$, $\gamma$, $c_p$ und $c_v$ beschreibt im Wesentlichen gleichwertig die Eigenschaften des Prozessgases und kann bei Bedarf in die jeweils anderen thermodynamischen Materialkonstanten überführt, beziehungsweise umgerechnet werden.

Es hat sich gezeigt, dass in vielen für die Praxis relevanten Anwendungsbereichen ausgehend von dem Massenstrom und mindestens einer Materialkonstanten, gegebenenfalls mindestens zwei weiteren Materialkonstanten auch die Eigenschaften des Prozessfluids ausreichend genau ermittelt werden können, um in Verbindung mit weiteren Informationen, die üblicherweise bei einer Prozessüberwachung erfasst und zusammengestellt werden, eine aussagekräftige Bestimmung des Betriebspunkts der Prozessanlage in dem Fluidleitungsabschnitt und damit eine zuverlässige Prozessüberwachung der Prozessanlage zu ermöglichen. Die Anzahl der notwendigerweise für die Prozessüberwachung zu ermittelnden Materialkonstanten ist unter anderem von den Anforderungen abhängig, die an die Prozessüberwachung gestellt werden, sowie von der Art bzw. den Eigenschaften des verwendeten Prozessfluids. So kann ein Prozessfluid, dass für die Prozessüberwachung als nichtkompressible Flüssigkeit angesehen werden kann, oftmals mit einer einzigen Materialkonstante wie beispielsweise der Dichte bereits für die Zwecke der Prozessüberwachung ausreichend charakterisiert werden. Für kompressible Flüssigkeiten, ideale oder reale Gase oder für inhomogene Fluidzusammensetzungen können zwei oder mehr Materialkonstanten für eine ausreichend präzise Charakterisierung des Prozessfluids und dessen relevanten Eigenschaften erforderlich sein.

Die Ermittlungsgrößen des Prozessfluids können mit geeigneten Messeinrichtungen in dem Fluidleitungsabschnitt gemessen werden. Oftmals können jedoch andere Kenngrößen wie insbesondere Drücke oder auch Temperaturen einfach und kostengünstig gemessen werden und mit zusätzlichen Informationen wie beispielsweise Betriebsparameter, Eigenschaften oder Kennlinien von der Anlagenkomponente zusammengeführt und für die Ermittlung der Ermittlungsgrößen verwendet werden.

Auch bei einem in seiner Zusammensetzung veränderlichen oder unbekannten Prozessfluid können oftmals Annahmen für das Prozessfluid berücksichtigt werden, die eine Auswertung der Ermittlungsgrößen für die Bestimmung des Betriebspunkts der Prozessanlage erleichtern und dennoch eine ausreichend präzise und zuverlässige Prozessüberwachung ermöglichen. So kann beispielsweise bei einem gasförmigen Prozessfluid in vielen Fällen angenommen werden, dass sich das Prozessgas wie ein ideales Gas verhält und durch die für ein ideales Gas bekannten Zustandsgleichungen beschrieben werden kann. Ebenso kann oftmals für eine tropfbare Prozessflüssigkeit wie beispielsweise Wasser oder eine Suspension angenommen werden, dass deren Dichte während der Prozessführung in dem Fluidleitungsabschnitt konstant bleibt, so dass ausschließlich Druckdifferenzen für eine Dynamik und das Strömungsverhalten der Prozessflüssigkeit verantwortlich sind.

Für ein Prozessgas, dessen Eigenschaften einem realen Gas entsprechen, können die für die Prozessüberwachung erforderlichen Eigenschaften zumindest näherungsweise diesen thermodynamischen Materialkonstanten abgeschätzt werden und bei Bedarf durch eine Ermittlung weiterer thermodynamischer Materialkonstanten wie beispielsweise durch die Ermittlung eines Kohäsionsdrucks oder eines Ko-Volumens bei einem mit der Van-der-Waals-Gleichung beschriebenen Prozessgas verbessert werden.

Gemäß einer vorteilhaften Ausgestaltung des Erfindungsgedankens ist vorgesehen, dass für die Ermittlung der Ermittlungsgrößen mindestens eine Strömungsgeschwindigkeit des Prozessgases ermittelt wird. Falls die Strömungsgeschwindigkeit des Prozessgases durch die Anlagenkomponente beeinflusst und verändert wird, kann die Strömungsgeschwindigkeit des Prozessgases vor und nach der Anlagenkomponente gemessen und für die Ermittlung der Ermittlungsgrößen verwendet werden.

Es ist ebenfalls möglich, unabhängig von der Strömungsgeschwindigkeit oder in Kombination mit der Strömungsgeschwindigkeit eine Ausbreitungsgeschwindigkeit einer akustischen Welle in dem Prozessgas zu ermitteln. Die Ausbreitungsgeschwindigkeit einer akustischen Welle in dem Prozessgas wird maßgeblich durch die Materialeigenschaften des Prozessgases vorgegeben und erlaubt Rückschlüsse auf die Materialkonstanten.

Sowohl die Strömungsgeschwindigkeit als auch die Ausbreitungsgeschwindigkeit können grundsätzlich für ein beliebiges Prozessfluid ermittelt und für die Prozessüberwachung verwendet werden.

Die einzelnen Ermittlungsgrößen können jeweils mit geeigneten Messvorrichtungen gemessen, beziehungsweise ermittelt werden. In vielen Fällen können jedoch bereits vorhandene Informationen zu der Prozessanlage und insbesondere zu der Anlagenkomponente für die Ermittlung der Ermittlungsgrößen berücksichtigt und vorteilhaft verwendet werden. Erfindungsgemäß ist vorgesehen, dass für die Ermittlung der Ermittlungsgrößen mindesten ein vorab ermitteltes Kennfeld der Anlagenkomponente verwendet wird. Beispielsweise ist für ein Ventil üblicherweise die Abhängigkeit des Massenstroms von einem Druckverhältnis oder von einer Druckdifferenz in dem Fluidleitungsabschnitt vor und nach der Anlagenkomponente bekannt. Für einen Verdichter oder für eine Pumpe sind Kennfelder für die Abhängigkeit eines Druckverhältnisses bzw. einer Druckdifferenz oder eines Wirkungsgrads von dem Massestrom durch den Verdichter bekannt. Derartige Kennfelder beschreiben Zusammenhänge zwischen den verschiedenen Kenngrößen, die experimentell, numerisch oder analytisch in eine Gleichung oder in mehrere Gleichungen überführt werden können und für die Ermittlung der Ermittlungsgrößen verwendet werden können.

In vielen Fällen werden von einem Hersteller der Anlagenkomponente bereits hilfreiche und verwertbare Informationen, beziehungsweise Kennfelder zur Verfügung gestellt. Die für die erfindungsgemäße Prozessüberwachung notwendigen Kennfelder können jedoch auch bei Bedarf überprüft oder vorab durch vorbereitende Messungen ermittelt und zusammengestellt werden. Es ist ebenfalls möglich, dass für die Ermittlung der Ermittlungsgrößen zwei verschiedene Kennfelder einer Anlagenkomponente verwendet werden.

In vielen Fällen weist die zu überwachende Prozessanlage mehrere Anlagenkomponenten auf. Erfindungsgemäß ist dann vorgesehen, dass der Fluidleitungsabschnitt eine von dem Prozessfluid durchströmte erste Anlagenkomponente und eine von dem Prozessfluid durchströmte zweite Anlagenkomponente aufweist und dass für die Ermittlung der Ermittlungsgrößen mindestens ein Kennfeld der ersten Anlagenkomponente und mindestens ein Kennfeld der zweiten Anlagenkomponente verwendet werden. Beispielsweise werden bei vielen Prozessanlagen Verdichter oder Pumpen jeweils mit einem Ventil kombiniert. Die jeweiligen Kennfelder können dann in Verbindung mit kostengünstig messbaren Kenngrößen wie beispielsweise Drücken oder Temperaturen vor und nach den einzelnen Anlagenkomponenten dazu verwendet werden, die gewünschten Ermittlungsgrößen zu ermitteln.

Um die Verwendung von Kennfeldern für die Ermittlung der Ermittlungsgrößen eines unbekannten Prozessfluids zu erleichtern ist vorgesehen, dass das betreffende Kennfeld ein entdimensioniertes Kennfeld ist. In vielen Fällen werden die Kennfelder einer Anlagenkomponente für ein neutrales und möglichst gut definiertes Fluid wie beispielsweise Luft oder Wasser erstellt. Die Materialeigenschaften des betreffenden Fluids können durch geeignete Umrechnungen aus den Kennfeldern herausgerechnet und die derart entdimensionierten Kennfelder für ein beliebiges Prozessfluid verwendet werden, sofern die mit den Kennfeldern beschriebenen Zusammenhänge zwischen den einzelnen Kenngrößen keine Abhängigkeit oder aber eine bekannte Abhängigkeit von dem jeweiligen Prozessfluid aufweisen. Sofern gegebenenfalls zunächst unbekannte Abhängigkeiten einzelner Kenngrößen oder Kennfelder von dem jeweiligen Prozessfluid bestehen, können ergänzende Messungen vorab durchgeführt und diese Abhängigkeiten ebenfalls durch weitere Kennfelder oder durch zumindest näherungsweise gültige Gleichungssysteme beschrieben und berücksichtigt werden, sofern diese Informationen für die Ermittlung der Ermittlungsgrößen und für die Prozessüberwachung erforderlich sind.

Es ist grundsätzlich möglich, dass der Massenstrom des Prozessfluids mit einem Massenstrom-Messgerät gemessen wird. Insbesondere bei geringen Massenströmen eignen sich die aus der Praxis bereits bekannten und üblicherweise im Bereich der Forschung und Entwicklung eingesetzten Coriolis-Massenstrommessgeräte. Durch die Messung des Massenstroms mit einem geeigneten Massenstrom-Messgerät kann eine sehr präzise und von weiteren Kenngrößen oder Annahmen unabhängige Bestimmung des Massenstroms durchgeführt werden.

Es ist vorgesehen, dass die Bestimmung des Betriebspunkts der Prozessanlage in Echtzeit erfolgt, um eine stabile Regelung des Prozessanlagenbetriebs zu ermöglichen. Dabei bedeutet Echtzeit, dass die Bestimmung des Betriebspunktes so verzögerungsarm ist und die für die Ermittlung der Ermittlungsgrößen erforderliche Bearbeitungsdauer geringer als eine ausreichend kurze Ermittlungsdauer ist, die eine zuverlässige Prozessüberwachung und Prozessregelung ermöglicht.

Gegebenenfalls kann vorgesehen sein, dass eine Zusatzmessgröße gemessen und mit dieser Zusatzmessgröße ein Betriebsverhalten der Anlagenkomponente ausgewertet wird.

Nachfolgend werden einige Ausführungsbeispiele beschrieben, die in der Zeichnung exemplarisch wiedergegeben sind. Es zeigt:

Fig. 1 und 2 ein erstes Ausführungsbeispiel, bei dem ausgehend von einem Kennfeld und zwei Messgrößen die Ermittlungsgrößen für ein Prozessgas ermittelt werden,

Fig. 3 und 4 ein zweites Ausführungsbeispiel, bei dem ausgehend von drei Kennfeldern und üblichen Kenngrößen die Ermittlungsgrößen für ein Prozessgas ermittelt werden, und

Fig. 5 ein drittes Ausführungsbeispiel, bei dem mit einem Coriolis-Massenstrommessgerät und einer Lavaldüse die Ermittlungsgrößen für ein Prozessgas ermittelt werden, wobei ein Massenstrom gemessen wird.

Ausführungsbeispiel 1:

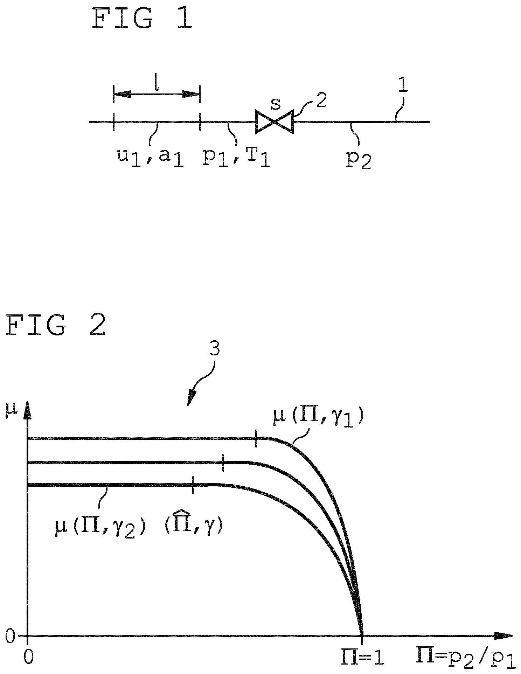

In Fig. 1 ist schematisch ein Fluidleitungsabschnitt 1 mit einem darin angeordneten Ventil 2 gezeigt, welches die hier relevante Anlagenkomponente bildet. Durch diesen Fluidleitungsabschnitt strömt ein gasförmiges Prozessfluid, welches als ideales Gas mit einer unbekannten Zusammensetzung angenommen wird. In Fig. 2 ist eine diesem Ventil 2 zugeordnete dimensionslose Kennlinie 3 des Ventils 2 schematisch dargestellt, welche den dimensionslosen Massenstrom $\mu$ in Abhängigkeit des Isentropenexponenten $\gamma$ als Funktion eines ebenfalls dimensionslosen Druckverhältnisses $\Pi := p_2/p_1$ abgebildet. Für den dimensionslosen Massenstrom $\mu\left(\Pi, \gamma, \frac{s}{\sqrt{A_1}}\right)$ gilt der folgende Zusammenhang

$$\mu\left(\Pi, \gamma, \frac{s}{\sqrt{A_1}}\right) = \frac{\dot{m}\sqrt{\gamma R_s T_1}}{A_1 p_1}, \qquad (1)$$

wobei mit $\dot{m}$ der Massenstrom, mit $\gamma$ der Isentropenexponenten des Prozessgases, mit $R_s$ die spezifische Gaskonstante des Prozessgases, mit $T_1$ die Temperatur vor dem Ventil, mit s der bekannte oder vorgegebene Stellweg des Ventils und mit $A_1$ ein Strömungsquerschnitt in einer Einströmungsöffnung des Ventils, und mit $p_1$ und $p_2$ der Druck vor, bzw. nach dem Ventil bezeichnet ist. Die Temperatur $T_1$ und die Drücke $p_1$ und $p_2$ werden gemessen. Der Stellweg $s$ und der Strömungsquerschnitt $A_1$ sind ebenfalls bekannt. Diese gemessenen Kenngrößen des Drucks und der Temperatur sowie die bekannten Kenngrößen und Betriebsparameter der Anlagenkomponente werden als übliche Kenngrößen bezeichnet, die bei nahezu allen Prozessanlagen ohne größeren Aufwand und kostengünstig gemessen und erfasst werden können. In Fig. 2 sind in dem Kennfeld exemplarisch verschiedene dimensionslose Massenstromkennlinien für verschiedene Isentropenexponenten $\gamma$, $\gamma_1$ und $\gamma_2$ dargestellt.

Die dimensionslose Kennlinie wird für die Ermittlung der Ermittlungsgrößen ($\dot{m}$, $R_s$, $\gamma$) in eine Gleichung überführt, in welcher der gesuchte Massenstrom und die gesuchten thermodynamischen Eigenschaften des Prozessgases ($\dot{m}$, $R_s$, $\gamma$) unbekannt sind. Um alle drei Größen bestimmen zu können sind also noch zwei weitere Informationen notwendig, die durch zwei weitere Messungen erfasst werden können.

In dem vorliegenden Ausführungsbeispiel wird deshalb die Ausbreitungszeit einer akustischen Welle über eine Länge $l$ in dem Prozessfluid in dem Fluidleitungsabschnitt gemessen. Bezeichnet $u_1$ die Strömungsgeschwindigkeit des Gases vor der Anlagenkomponente, d.h. vor dem Ventil 2, dann ist die Ausbreitungszeit der akustischen Welle in Strömungsrichtung $t_{1+} = l/(a_1 + u_1)$. Entgegen der Strömungsrichtung ist die Ausbreitungszeit $t_{1-} = l/(a_1 - u_1)$. Durch das Einbringen von akustischen Wandlern im Abstand $l$ in dem Fluidleitungsabschnitt mit einem Strömungsquerschnitt $A_1$ können also $t_{1+}$ und $t_{1-}$ und damit

$$a_1 = \sqrt{\gamma R_s T_1} \qquad (2)$$

und

$$u_1 = \frac{\dot{m} R_s T_1}{A_1 p_1} \qquad (3)$$

bestimmt werden, wobei mit $a_1$ die Schallgeschwindigkeit in dem Prozessfluid bezeichnet wird. Die Gleichungen (1), (2), (3) bilden ein implizites, nichtlineares algebraisches Gleichungssystem, welches in der Regel eine eindeutige Lösung zeigt. Auf diese Weise können die gesuchten Ermittlungsgrößen ($\dot{m}$, $R_s$, $\gamma$) durch eine kostengünstige Messung der beiden Ausbreitungszeiten $t_{1+}$ und $t_{1-}$ mit Schallwandlern sowie der Drücke $p_1$ und $p_2$ und der Temperatur $T_1$ ermittelt werden.

Alternativ zur Bestimmung der Schallgeschwindigkeit $a_1$ über eine Laufzeitmessung kann die Schallgeschwindigkeit $a_1$ auch über das akustische Übertragungsverhalten bestimmt werden. Hierzu wird inline nach der Resonanz einer akustischen Strecke bzw. eines mit dem Fluidleitungsabschnitt 1 verbundenen Volumens gesucht. Dies kann dadurch geschehen, dass die Frequenz eines akustischen Wandlers (Membranaktor, Piezoaktor,...) solange durchgestimmt wird, bis eine Resonanz festgestellt ist.

Alternativ zur Bestimmung der Strömungsgeschwindigkeit $u_1$ über Laufzeitmessung kann die Strömungsgeschwindigkeit $u_1$ auch über die Frequenz von abgelösten Wirbeln nach einem Strömungshindernis in dem Fluidleitungsabschnitt 1 bestimmt werden. Über die Frequenz $f_1$ sowie die typische Abmessung $l_1$ des Widerstands lässt sich die Strömungsgeschwindigkeit bestimmen zu $u_1 = c_1 l_1 f_1$, wobei mit $c_1$ eine Proportionalitätskonstante bezeichnet ist.

Werden vor und hinter einem Ventil 2 jeweils die absolute Temperatur sowie die Strömungsgeschwindigkeit $u_1, T_1, u_2, T_2$ gemessen, dann kann vermittels des ersten Hauptsatzes der Thermodynamik die spezifische Wärmekapa-

zität bei konstantem Druck $c_p$ berechnet werden gemäß

$$T_1 c_p + \frac{u_1^2}{2} = T_2 c_p + \frac{u_2^2}{2}.$$

Der Isentropenexponent $\gamma$ ist direkt von dem Mittelwert der Freiheitsgrade der Moleküle abhängig. Ein einatomiges Gasmolekül hat drei Translationsfreiheitsgrade. Ein zweiatomiges Gasmolekül hat zusätzlich zwei Rotationsfreiheitsgrade genauso wie ein gerades dreiatomiges Gasmolekül. Ein gewinkeltes dreiatomiges Gasmolekül hat zusätzlich einen Rotationsfreiheitsgrad, also insgesamt sechs Starrkörperfreiheitsgrade $f$. Der Isentropenexponent $\gamma$ ist dann durch $\gamma = 1 + 2/f$ gegeben. Da Luft nur aus zweiatomigen Molekülen mit insgesamt fünf Starrkörperfreiheitsgraden $f$ besteht, gilt für Luft $\gamma = 1 + 2/5 = 7/5$. Damit ergibt sich $\gamma = 1 + 2/3 = 1.66$ für einatomige Gase, $\gamma = 7/5 = 1.40$ für zweiatomige Gase und $\gamma = 4/3 = 1.33$ für dreiatomige Gase. Das vermittels einer Spektroskopie (Absorption oder Emission) erhaltene Spektrum eines Prozessgases enthält Informationen über die eingefrorenen oder Starrkörperfreiheitsgrade $f$ des Prozessgases. Damit ist optisch die thermodynamische Eigenschaft des Gases in Teilen bestimmbar.

Ausführungsbeispiel 2:

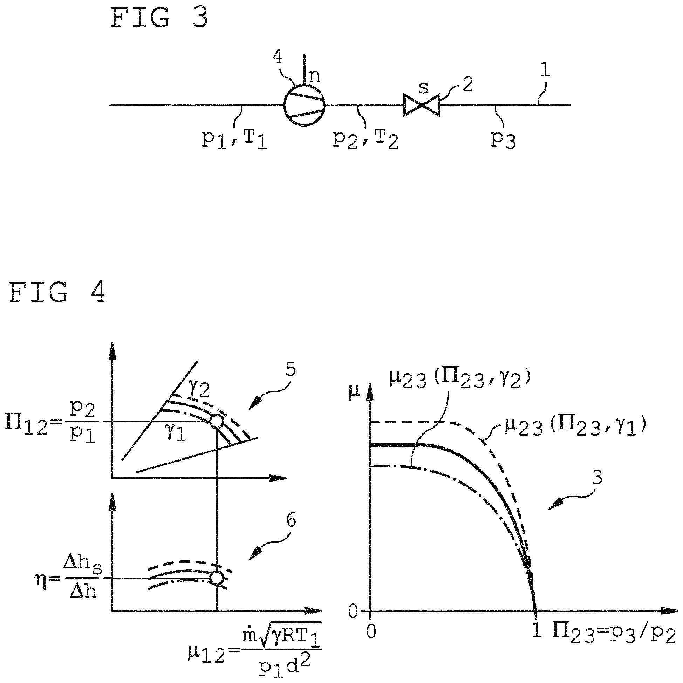

Bei dem in Fig. 3 gezeigten Fluidleitungsabschnitt 1 ist zusätzlich vor dem Ventil 2 ein Verdichter 4 angeordnet. Für den Verdichter 4 sind zwei jeweils dimensionslose Kennfelder bekannt, wobei in einem ersten Kennfeld 5 ein dimensionsloses Druckverhältnis $\Pi := p_2/p_1$ über dem dimensionslosen Massenstrom $\mu(\Pi, \gamma)$ aufgetragen ist und in einem zweiten Kennfeld 6 des Verdichters 4 ein dimensionsloser Wirkungsgrad $\eta(\mu_{12}, Ma, \gamma)$, der von dem dimensionslosen Massenstrom $\mu_{12}$ durch den Verdichter, der Machzahl $Ma$ und dem Isentropenexponenten $\gamma$ abhängt, über dem dimensionslosen Massenstrom $\mu_{12}$ aufgetragen ist. Die Machzahl $Ma$ kann aus der Strömungsgeschwindigkeit und den Kenngrößen des Verdichters ermittelt werden gemäß $Ma = \frac{nd}{a_1}$, wobei mit $n$ eine Drehzahl und mit $d$ ein Laufraddurchmesser des Verdichters 4 bezeichnet sind. Für das Ventil 2 ist das bereits in dem Ausführungsbeispiel 1 eingeführte Kennfeld 3 des dimensionslosen Massenstroms $\mu_{23}$ über dem ebenfalls dimensionslosen Druckverhältnis $\Pi := p_3/p_2$ aufgetragen. Die jeweiligen Indizes deuten den jeweiligen Messort in dem Fluidleitungsabschnitt vor dem Verdichter 4, zwischen dem Verdichter 4 und dem Ventil 2 und nach dem Ventil 2 an. Die Kennfelder 3, 5 und 6 sind in Fig. 4 rechts, links oben und links unten schematisch dargestellt. In allen Kennfeldern 3, 5 und 6 sind jeweils mehrere exemplarische Kennlinien für verschiedene Isentropenexponenten $\gamma$, $\gamma_1$ und $\gamma_2$ dargestellt.

Mit den Kennfeldern 5, 6 und 3 können die jeweiligen Abhängigkeiten in das folgende Gleichungssystem überführt werden:

$$\frac{p_2}{p_1} = \Pi_{12}\left(\mu_{12} = \frac{\dot{m}\sqrt{\gamma R_s T_1}}{d^2 p_1}, Ma = \frac{nd}{a_1}, \gamma\right), \qquad (4)$$

$$\frac{T_1}{T_2 - T_1}\left[\Pi_{12}^{(\gamma-1)/\gamma} - 1\right] := \eta(\mu_{12}, Ma, \gamma), \qquad (5)$$

und

$$\frac{\dot{m}\sqrt{\gamma R_s T_2}}{A_1 p_2} = \mu_{23}\left(\Pi_{23} = \frac{p_3}{p_2}, \gamma, \frac{s}{\sqrt{A_1}}\right). \qquad (6)$$

Dieses Gleichungssystem ermöglicht ebenfalls nach einer Messung der Messgrößen $p_1, T_1, p_2, T_2, p_3$, also von Drücken und Temperaturen, und bei Kenntnis der Drehzahl und des Laufraddurchmessers des Verdichters 4 sowie des Stellwegs s des Ventils 2 die Ermittlung der gesuchten Ermittlungsgrößen ($\dot{m}, R_s, \gamma$).

Ausführungsbeispiel 3:

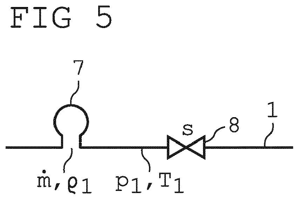

In dem Fluidleitungsabschnitt 1 sind ein Coriolis-Massenstrommessgerät 7 und eine Lavaldüse 8 angeordnet (Fig. 5). Mit dem Coriolis-Massenstrommessgerät 7 wird der Massenstrom $\dot{m}$ gemessen. Für die Lavaldüse 7 ist wie auch in den vorausgegangenen Ausführungsbeispielen über ein dimensionsloses Kennfeld der Zusammenhang

$$\frac{\dot{m}\sqrt{\gamma R T_1}}{A_1 p_1} = \mu\left(\Pi, \gamma, \frac{s}{\sqrt{A_1}}\right) \qquad (7)$$

bekannt. Sinkt während der Prozessführung das Druckverhältnis $\Pi$, so erreicht die Strömung ab einem Druckverhältnis $\hat{\Pi}$ Schallgeschwindigkeit im engsten Strömungsquerschnitt der Lavaldüse 8. Für $\Pi < \hat{\Pi}(\gamma)$ muss die Abhängigkeit vom Druck $p_2$ stromab des Lavalventils 8 verschwinden. Damit kann die Kennlinie beim sogenannten überkritischen Druckverhältnis auch nicht mehr von $\Pi$ abhängen. Man nennt diesen Grenzwert $\hat{\mu}(\gamma)$ bildhaft Stopfgrenze des Ventils. Damit

gilt für Druckverhältnisse $\Pi < \hat{\Pi}(\gamma)$ der Zusammenhang $\mu = \hat{\mu}\left(\gamma, \frac{s}{\sqrt{A_1}}\right),$ demzufolge $\mu\left(\Pi, \gamma, \frac{s}{\sqrt{A_1}}\right)$ nicht mehr von dem Druckverhältnis $\Pi$ abhängt.

Das Coriolis-Massenstrommessgerät 7 liefert sowohl den Massenstrom $\dot{m}$ als auch einen Messwert für eine Dichte $\varrho_1$ des Prozessgases vor der Lavaldüse 8. Über die Zustandsgleichung für thermisch ideale Gase

$$\varrho_1 = \frac{p_1}{R_s T_1} \qquad (8)$$

kann das Gleichungssystem für diesen Fluidleitungsabschnitt geschlossen werden. Der Vorteil der hier gezeigten Anordnung ist, dass das Messsystem bestehend aus dem Coriolis-Massenstrommessgerät 7 und der Lavaldüse 8 mit den vier Messgrößen $p_1$, $T_1$, $\varrho_1$, $\dot{m}$ vorab im Labor kalibriert werden kann. Idealerweise wird es dann im Bypass betrieben und dient in diesem Fall der Bestimmung der gesuchten thermodynamischen Gaseigenschaften $R_s$ und $\gamma$.

**Patentansprüche**

1. Verfahren zur Prozessüberwachung einer Prozessanlage mit einem von einem Prozessfluid durchströmten Fluidleitungsabschnitt (1) mit einer Einströmöffnung und mit einer Ausströmöffnung, wobei zwischen der Einströmöffnung und der Ausströmöffnung mindestens eine die Fluidströmung beeinflussende Anlagenkomponente (2, 4, 8) angeordnet ist und wobei das durch die Einströmöffnung in den Fluidleitungsabschnitt (1) einströmende Prozessfluid durch die Ausströmöffnung wieder ausströmt, wobei in einem Ermittlungsschritt innerhalb einer vorgegebenen Ermittlungsdauer in dem Fluidleitungsabschnitt ein durch die mindestens eine Anlagenkomponente hindurchströmender Massenstrom $\dot{m}$ und mindestens eine Materialkonstante als Ermittlungsgrößen des Prozessfluides ermittelt werden, um einen Betriebspunkt der Prozessanlage in dem Fluidleitungsabschnitt (1) zu bestimmen, wobei der durch die mindestens eine Anlagenkomponente hindurchströmende Massenstrom $\dot{m}$ und mindestens zwei Materialkonstanten als Ermittlungsgrößen des Prozessfluides ermittelt werden und in dem Ermittlungsschritt zwei thermodynamische Materialkonstanten des Prozessgases ermittelt werden, **dadurch gekennzeichnet, dass** die zwei thermodynamischen Materialkonstanten ein Wertepaar aus der spezifischen Gaskonstante $R_s$, aus dem Isentropenexponent $\gamma$ und aus den spezifischen Wärmekapazitäten bei konstantem Druck $c_p$ oder bei konstantem Volumen $c_v$ bildet.

2. Verfahren nach Anspruch 1, **dadurch gekennzeichnet, dass** für die Ermittlung der Ermittlungsgrößen mindestens eine Strömungsgeschwindigkeit $u_1$ des Prozessgases ermittelt wird.

3. Verfahren nach Anspruch 1 oder Anspruch 2, **dadurch gekennzeichnet, dass** eine Ausbreitungsgeschwindigkeit $a_1$ einer akustischen Welle in dem Prozessgas ermittelt wird.

4. Verfahren nach einem der vorausgehenden Ansprüche, **dadurch gekennzeichnet, dass** für die Ermittlung der Ermittlungsgrößen mindestens ein vorab ermitteltes Kennfeld der Anlagenkomponente verwendet wird.

**5.** Verfahren nach Anspruch 4, **dadurch gekennzeichnet, dass** für die Ermittlung der Ermittlungsgrößen zwei verschiedene Kennfelder der Anlagenkomponente verwendet werden.

**6.** Verfahren nach Anspruch 4 oder Anspruch 5, **dadurch gekennzeichnet, dass** der Fluidleitungsabschnitt (1) eine von dem Prozessfluid durchströmte erste Anlagenkomponente und eine von dem Prozessfluid durchströmte zweite Anlagenkomponente aufweist und dass für die Ermittlung der Ermittlungsgrößen mindestens ein Kennfeld der ersten Anlagenkomponente und mindestens ein Kennfeld der zweiten Anlagenkomponente verwendet werden.

**7.** Verfahren nach einem der vorangehenden Ansprüche 4 bis 6, **dadurch gekennzeichnet, dass** mindestens ein verwendetes Kennfeld ein entdimensioniertes Kennfeld ist.

**8.** Verfahren nach einem der vorangehenden Ansprüche, **dadurch gekennzeichnet, dass** der Massenstrom $\dot{m}$ des Prozessfluids mit einem Massenstrom-Messgerät gemessen wird.

**9.** Verfahren nach einem der vorangehenden Ansprüche, **dadurch gekennzeichnet, dass** die Bestimmung des Betriebspunkts der Prozessanlage in Echtzeit erfolgt, um eine stabile Regelung des Prozessanlagenbetriebs zu ermöglichen.

**Claims**

**1.** Method for the process monitoring of a process system having a fluid-line portion (1), through which a process fluid flows and which comprises an inflow opening and an outflow opening, wherein at least one system component (2, 4, 8) which influences the fluid flow is arranged between the inflow opening and the outflow opening, and wherein the process fluid flowing into the fluid-line portion (1) through the inflow opening flows out again through the outflow opening, wherein a mass flow m which flows through the at least one system component and at least one material constant are determined as determination variables of the process fluid in the fluid-line portion in a determination step within a predetermined determination duration in order to identify an operating point of the process system in the fluid-line portion (1), wherein the mass flow m which flows through the at least one system component and at least two material constants are determined as determination variables of the process fluid and two thermodynamic material constants of the process gas are determined in the determination step, **characterised in that** the two thermodynamic material constants form a value pair from the specific gas constant $R_s$, the isentropic exponent $\gamma$, and the specific heat capacities at a constant pressure $c_p$ or a constant volume $c_v$.

**2.** Method according to claim 1, **characterised in that** at least one flow speed $u_1$ of the process gas is determined for the determination of the determination variables.

**3.** Method according to claim 1 or claim 2, **characterised in that** a propagation speed $a_1$ of an acoustic wave in the process gas is determined.

**4.** Method according to any of the preceding claims, **characterised in that** at least one previously determined characteristic map of the system component is used for determining the determination variables.

**5.** Method according to claim 4, **characterised in that** two different characteristic maps of the system component are used for determining the determination variables.

**6.** Method according to claim 4 or claim 5, **characterised in that** the fluid-line portion (1) comprises a first system component through which the process fluid flows and a second system component through which the process fluid flows, and **in that** at least one characteristic map of the first system component and at least one characteristic map of the second system component are used.

**7.** Method according to any of the preceding claims 4 to 6, **characterised in that** at least one characteristic map used is a nondimensionalised characteristic map.

**8.** Method according to any of the preceding claims, **characterised in that** the mass flow m of the process gas is measured using a mass-flow meter.

**9.** Method according to any of the preceding claims, **characterised in that** the operating point of the process system is identified in real time in order to make it possible to regulate the operation of the process system in a stable manner.

**Revendications**

1. Procédé de surveillance du traitement d'une installation de traitement comprenant un segment de conduite de fluide (1) parcouru par un fluide de traitement doté d'un orifice d'admission et d'un orifice d'écoulement, au moins un composant d'installation (2, 4, 8), qui influence l'écoulement du fluide, étant disposé entre l'orifice d'admission et l'orifice d'écoulement et le fluide de traitement admis dans le segment de conduite de fluide (1) à travers de l'orifice d'admission s'écoulant de nouveau à travers de l'orifice d'écoulement, un débit massique $\dot{m}$ traversant l'au moins un composant d'installation et au moins une constante de la matière comme grandeur de détermination du fluide de traitement étant déterminés dans une étape de détermination pendant une durée de détermination prédéfinie dans le segment de conduite de fluide, pour définir un point de fonctionnement de l'installation de traitement dans le segment de guidage de fluide (1), le débit massique $\dot{m}$ traversant l'au moins un composant d'installation et au moins deux constantes de la matière comme grandeurs de détermination du fluide de traitement étant déterminés et deux constantes thermodynamiques de la matière du gaz de traitement étant déterminées dans l'étape de détermination, **caractérisé en ce que** les deux constantes thermodynamiques de la matière forment une paire de valeurs à partir de la constante spécifique du gaz $R_s$, l'exposant isentropique $\gamma$ et les capacités thermiques massiques à pression constante $c_p$ ou à volume constant $c_v$.

2. Procédé selon la revendication 1, **caractérisé en ce qu'**au moins une vitesse d'écoulement $u_1$ du gaz de traitement est déterminée pour la détermination des grandeurs de détermination.

3. Procédé selon la revendication 1 ou la revendication 2, **caractérisé en ce qu'**une vitesse de propagation $a_1$ d'une onde acoustique dans le gaz de traitement est déterminée.

4. Procédé selon l'une des revendications précédentes, **caractérisé en ce qu'**au moins un diagramme caractéristique préalablement déterminé du composant d'installation est utilisé pour la détermination des grandeurs de détermination.

5. Procédé selon la revendication 4, **caractérisé en ce que** deux différents diagrammes caractéristiques du composant d'installation sont déterminés pour la détermination des grandeurs de détermination.

6. Procédé selon la revendication 4 ou la revendication 5, **caractérisé en ce que** le segment de conduite de fluide (1) comporte un premier composant d'installation traversé par le fluide de traitement et un second composant d'installation traversé par le fluide de traitement et **en ce qu'**au moins un diagramme caractéristique du premier composant d'installation et au moins un diagramme caractéristique du second composant d'installation sont utilisés pour la détermination des grandeurs de détermination.

7. Procédé selon l'une des revendications précédentes 4 à 6, **caractérisé en ce qu'**au moins un diagramme caractéristique utilisé est un diagramme caractéristique adimensionné.

8. Procédé selon l'une des revendications précédentes, **caractérisé en ce que** le débit massique $\dot{m}$ du fluide de traitement est mesuré au moyen d'un instrument de mesure du débit massique.

9. Procédé selon l'une des revendications précédentes, **caractérisé en ce que** la détermination du point de fonctionnement de l'installation de traitement est effectuée en temps réel pour permettre une régulation stable du fonctionnement de l'installation de traitement.

FIG 1

$$l$$

$$s \quad 2$$

$$1$$

$$u_1, a_1 \quad p_1, T_1 \quad p_2$$

FIG 2

$$3$$

$$\mu$$

$$\mu(\Pi, \gamma_1)$$

$$\mu(\Pi, \gamma_2) \quad (\widehat{\Pi}, \gamma)$$

$$0$$

$$0 \qquad \Pi=1 \quad \Pi=p_2/p_1$$

FIG 3

FIG 4

FIG 5

$\dot{m}, \varrho_1$   $p_1, T_1$

**IN DER BESCHREIBUNG AUFGEFÜHRTE DOKUMENTE**

**In der Beschreibung aufgeführte Patentdokumente**

- US 2008134755 A1
- DE 102008021102 A1